# EUROPÄISCHE PATENTSCHRIFT

(11) **EP 3 468 898 B1**
(45) Veröffentlichungstag und Bekanntmachung des Hinweises auf die Patenterteilung: **13.05.2020**
(21) Anmeldenummer: 17733342.4
(22) Anmeldetag: 13.06.2017
(51) Int. Cl.: B65G 1/04, B65G 1/10, B65G 1/137, B65G 1/07

(54) **KOMMISSIONIERSYSTEM MIT EINEM TRANSPORTROBOTER ZUM UNTERFAHREN VON EINZELREGALEN UND TRANSPORTWAGEN**
ORDER-PICKING SYSTEM WITH A TRANSPORT ROBOT FOR PASSING BENEATH INDIVIDUAL RACKS AND TRANSPORT TROLLEY
SYSTÈME DE PRÉPARATION DE COMMANDES COMPRENANT UN ROBOT DE TRANSPORT DESTINÉ À PASSER SOUS DES RAYONNAGES INDIVIDUELS ET DES CHARIOTS DE TRANSPORT

(30) Priorität: 14.06.2016 AT 5010316 U
(43) Veröffentlichungstag der Anmeldung: 17.04.2019
(73) Patentinhaber: Knapp AG, 8075 Hart bei Graz (AT)
(72) Erfinder: MATHI, Franz, 8200 Gleisdorf (AT); TSCHURWALD, Anton, 8046 Stattegg (AT); LEBERNEGG, Gregor, 8042 Graz (AT); HOFBAUER, Wolfrum, 8101 Gratkorn (AT)
(74) Vertreter: Röggla, Harald
(86) Internationale Anmeldenummer: PCT/AT2017/060151
(87) Internationale Veröffentlichungsnummer: WO 2017/214652

(56) Entgegenhaltungen:
- WO-A1-2015/097736
- AT-U1- 14 694
- US-A- 3 418 031
- US-A1- 2014 100 769
- US-A1- 2015 073 589
- US-A1- 2016 026 186

## Beschreibung

Die Erfindung betrifft ein Kommissioniersystem zum Kommissionieren von in einem Regallager gelagerten Artikeln in Fördertaschen mit einer Mehrzahl an in Regalreihen und/oder Regalebenen angeordneten Regallagerplätzen des Regallagers zum Lagern der Artikel und mit einer Hängefördertechnik zum Transport von Fördertaschen und mit einem Kommissionierplatz gemäß dem Ware-zu-Person-Prinzip, an dem eine von einem Steuerrechner vorgegebene Anzahl von Artikeln in Fördertaschen kommissionierbar ist.

Die Erfindung betrifft weiters ein Kommissionierverfahren zum Kommissionieren von in einem Regallager gelagerten Artikeln in Fördertaschen mit einem Steuerrechner zum Abarbeiten von Kommissionieraufträgen, der das Kommissionieren an zumindest einem Kommissionierplatz gemäß folgenden Verfahrensschritten vorgibt:
Transport eines für einen Kommissionierauftrag benötigten Artikels von dem Regallager zu dem Kommissionierplatz;
Kommissionieren der für den Kommissionierauftrag benötigten Anzahl an Artikeln in die dem zumindest einen Kommissionierauftrag zugeordneten Fördertaschen an dem Kommissionierplatz.

Das Dokument DE 10 2011 116 081 B3 offenbart ein solches Kommissioniersystem und Kommissionierverfahren, bei dem eine Lagerbehälterfördertechnik Lagerbehälter in den Arbeitsbereich einer Kommissionierperson transportiert, worauf die von einer Steuereinrichtung angegebene Anzahl an Artikeln von der Kommissionierperson aus dem Lagerbehälter entnommen und in Fördertaschen eines Kommissionierauftrags gelegt werden. Eine Hängefördertechnik transportiert die Fördertaschen ab, in die von der Kommissionierperson Artikel kommissioniert wurden. Hierbei kann eine Batchkommissionierung durchgeführt werden, bei der Artikel mehrerer Aufträge in eine Fördertasche gelegt werden. In einem anschließenden Puffer- und Sortierbereich werden die Fördertaschen zwischengespeichert und/oder in die richtige Reihenfolge gebracht, um die Artikel in einer anschließenden Packstation in je einen Auftragsbehälter je Auftrag zu packen. Die Batchkommissionierung hat den Vorteil, dass die Lagerbehälterfördertechnik entlastet wird, da der Lagerbehälter einer bestimmten Art eines Artikels nicht jedes Mal aus- und nach der Kommissionierung wieder eingelagert werden muss, sondern gleich mehrere Artikel dieser Art für mehrere Aufträge entnommen und als "Batch" in eine Fördertasche kommissioniert werden können.

Bei diesem bekannten Kommissioniersystem hat sich als Nachteil erwiesen, dass die Lagerbehälterfördertechnik, trotz Batchkommissionierung ein Nadelöhr für die Anzahl an Kommissionierplätzen darstellt, zu denen parallel Lagerbehälter mit zu kommissionierenden Artikeln transportiert werden müssen. Insbesondere für sogenannte schnelldrehende Artikel müssen die Lagerbehälter sehr oft aus dem Regallager ausgelagert und neuerlich eingelagert werden, was eine Verzögerung für anderen Kommissionierplätze bedeuten kann, die den gleichen schnelldrehenden Artikel zum Kommissionieren benötigt.

Weiters weist eine fix verbaute Fördertechnik mehrere Nachteile auf. Sie ist nicht nur kostenintensiv bei der Herstellung sonder auch starr und schlecht für den aktuellen Bedarf skalierbar. Sie muss auf die maximal benötigte Leistung ausgelegt werden, wird dann in der Praxis aber über weite Zeitbereiche nur zu einem geringen Prozentsatz ausgelastet. Wenn das Layout des Kommissioniersystems geändert werden soll, um beispielsweise weitere Kommissionierplätze einzubinden, dann sind meist größere und kostenintensive Umbauten nötig.

Aus dem Dokument AT 14694 U1 ist ein Kommissionierplatz zum Kommissionieren von Artikeln in Auftragsbehälter und Fördertaschen bekannt.

Aus dem Dokument US 2014/0100769 A1 ist ein System zum Wiederauffüllen von Verkaufseinrichtungen bekannt.

Der Erfindung liegt die Aufgabe zugrunde ein Kommissioniersystem zu schaffen, bei dem die vorstehenden Nachteile vermieden sind. Die Aufgabe wird mit dem Kommissioniersystem gemäß Anspruch 1 sowie dem Kommissionierverfahren gemäß Anspruch 10 gelöst.

Hierdurch ist der Vorteil erhalten, dass auf eine klassische Lagerbehälterfördertechnik zum Auslagern von Lagerbehältern und zum Transport der Lagerbehälter von dem Regallager zu dem Kommissionierplatz verzichtet werden kann. Gegebenenfalls kann sogar auf das Vorsehen von Lagerbehältern gänzlich verzichtet werden, da ja das gesamte Einzelregal transportiert wird. Dadurch, dass das Regallager modular durch aneinander gereihte Einzelregale gebildet ist, kann jederzeit ein beliebiges einen zu kommissionierenden Artikel enthaltendes Einzelregal aus der Reihe der Einzelregale heraustransportiert werden. Hierfür ist zumindest ein durch einen Steuerrechner des Kommissioniersystems gesteuerter oder autonom fahrender Transportroboter vorgesehen, der klein genug ausgebildet ist, um unter das Einzelregal zu fahren. Besonders vorteilhaft ist weiters, dass auf einem Einzelregal kundenspezifisch n verschiedene Artikel transportiert und gleichzeitig bereit gestellt werden können. Änderungen des Layouts und Erweiterungen sind wesentlich einfacher zu bewerkstelligen, da nur andere Punkte im Layout vorgegeben werden bzw. Transportroboter hinzugefügt werden. Auch das Anbinden von neuen Kommissionierplätzen ist bei einem erfindungsgemäßen Kommissioniersystem besonders einfach durchführbar. Die Transportleistung muss nicht fix im Vorfeld festgelegt werden, da zeitweiliges hinzufügen von Transportrobotern zu einer Erhöhung der Transportleistung führt.

Es kann erwähnt werden, dass solche Transportroboter zum Transport von Einzelregalen beispielsweise von der Firma Kiva oder Swisslog verkauft werden. Es sind Kommissioniersysteme bekannt, bei denen diese Transportroboter die Einzelregale aus dem Regallager zu dem Ware-zu-Person Kommissionierplatz transportieren, wobei Artikel ausschließlich von den Einzelregalen des Regallagers in andere Regale kommissioniert werden. Obwohl diese Transportroboter schon seit Jahren am Markt erhältlich sind hat jedoch keiner der mit diesen Technologien vertrauten Fachleuten die erfindungsgemäße Kombination des Transports von Einzelregalen zu einem Ware-zu-Mann Kommissionierplatz geschaffen, an dem Batchkommissionierung in Fördertaschen erfolgt. Nur durch diese erfindungsgemäße Kombination an sich bekannter Maßnahmen ist ein effektives Kommissioniersystem und Kommissionierverfahren mit besonders wenigen Transportfahrten zwischen dem Regallager und dem Kommissionierplatz ermöglicht.

Erfindungsgemäß ist es Einzelregaltransportwege in dem Kommissioniersystem festzulegen, entlang der die Transportroboter die Einzelregale transportieren können ohne an Objekten anzustoßen oder mit anderen Transportrobotern zu kollidieren. Diese Einzelregaltransportwege können auch in bestimmten Abschnitten unter der Hängefördertechnik durchgeführt werden, um möglichst kurze Einzelregaltransportwege zu schaffen. Besonders vorteilhaft ist es Einzelregaltransportwege zwischen Kommissionierplätzen vorzusehen, um Einzelregale mit zuerst bei einem Kommissionierplatz und später bei dem anderen Kommissionierplatz zum Kommissionieren benötigten Artikeln nicht über das Regallager sondern direkt zu transportieren.

Besonders vorteilhaft ist es die Transportroboter mit einem Laserscanner auszurüsten, der beispielsweise in einem Öffnungswinkel von 270 Grad und einer Wiederholfrequenz von beispielsweise 12Hz die Umgebung des Transportroboters abscannt, um Objekte, die sich im Transportweg befinden könnten, zu erkennen und, um die Festlegung der Transportrichtung zu unterstützen. Hierdurch ist eine besonders zuverlässige und kostengünstige Steuerungseinheit erhalten, um Objekte zu detektieren und Kollisionen mit diesen Objekten zu vermeiden.

Vorteilhaft ist weiters dem Transportroboter in einem Lernmodus das Layout des Regallagers, also die Positionen und Ausdehnungen von Objekten, wie Stehern der Lagerhalle, Wände oder Türen abscannen und speichern zu lassen. Diese Positionsinformationen können dann für die Festlegung der Transportrichtung genutzt werden, um entlang der Einzelregaltransportwege zu fahren. In diesem Lernmodus kann der Transportroboter manuell mit der Hand oder auch motorisch angetrieben entlang den Einzelregaltransportwegen transportiert werden. Das sich daraus ergebende gescannte Abbild von Objekten neben den Einzelregaltransportwegen kann manuell am Computer der Steuerungseinheit nachgebessert werden, um beispielsweise sich bei der Fahrt im Lernmodus im Weg befindliche Füße der Bedienperson wieder zu löschen. Anschließend können diese Positionsinformationen an alle Transportroboter des Kommissioniersystems übertragen werden. Gemäß einer weiteren Ausführungsvariante könnte auf den Lernmodus verzichtet werden und das Layout des Kommissioniersystems mit seinen Einzelregaltransportwegen vom Steuerrechner direkt in die Transportroboter eingespielt und dort gespeichert werden.

Weitere vorteilhafte Ausgestaltungen des erfindungsgemäßen Kommissioniersystems und Kommissionierverfahrens werden im Folgenden anhand der Figuren näher erläutert.
Figur 1 zeigt ein Einzelregal unter dem ein Transportroboter steht.
Figur 2 zeigt mehrere Kommissionierplätze mit von Transportrobotern aus einem Regallager transportierten Einzelregalen und mit einer Hängefördertechnik zum Abtransport von Fördertaschen mit kommissionierten Artikeln in einer Schrägansicht.
Figur 3 zeigt die von einem Transportroboter in einem Lernmodus gespeicherten Positionsinformationen.
Figur 4 zeigt mehrere Kommissionierplätze mit von Transportrobotern aus einem Regallager transportierten Einzelregalen und mit einer Hängefördertechnik zum Abtransport von Fördertaschen mit kommissionierten Artikeln und mit einem Bandförderer zum Abtransport von Auftragsbehälterkisten mit kommissionierten Artikeln in einer Schrägansicht.
Figur 5 zeigt einen Transportwagen in Form eines Federbodenwagens.

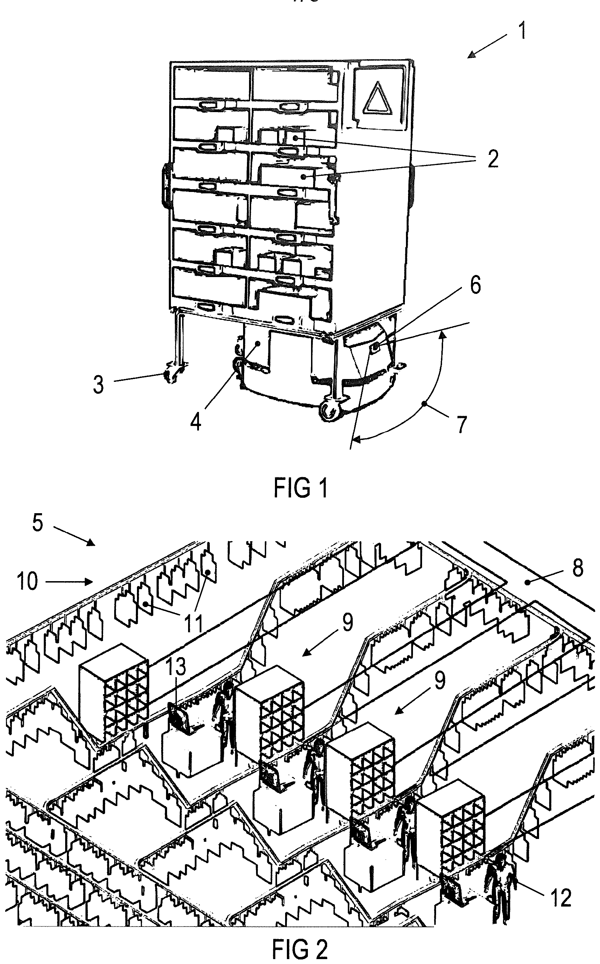

Figur 1 zeigt ein Einzelregal 1 eines Regallagers, das aus einer Vielzahl solcher nebeneinander und hintereinander angeordneter Einzelregale 1 besteht und zum Lagern von Artikeln 2 vorgesehen ist. Das Einzelregal 1 weist Rollen 3 an den Füßen des Einzelregals 1 auf, um das Einzelregal 1 ohne besonders großen Energieaufwand am Boden entlang zu rollen. Unter dem Einzelregal 1 ist ein Transportroboter 4 zu sehen, der elektrisch angetrieben wird und eine Steuerungseinheit aufweist, die durch einen Steuerrechner des in Figur 2 dargestellten Kommissioniersystems 5 gesteuert wird. Solche Transportroboter 4 werden beispielsweise von der Firma Kiva oder Swisslog verkauft, wobei der Transportroboter 4 besondere erfindungsgemäße Merkmale aufweist.

Der Transportroboter 4 hebt das Einzelregal 1 nicht an, sondern rollte es mit seinen Rollen 3 entlang des Bodens, wodurch der Transportroboter 4 technisch einfach aufgebaut und weniger Energie verbraucht, als wenn er jedes zu transportierende Einzelregal 1 vom Boden anheben müsste. Der Transportroboter 4 weist weiters einen Laserscanner 6 auf, der in einem Öffnungswinkel 7 befindliche Objekte scannt, um mögliche Kollisionen mit diesen Objekten zu vermeiden. Der Transportroboter 4 kann weitere Sensoren aufweisen, um die Navigation innerhalb des Kommissioniersystems 5 zu verbessern. Hierfür kann er ein Gyroskop zur Lagebestimmung des Transportroboters 4 aufweisen. Der Transportroboter 4 kann weiters einen Reflektordetektor zur Detektion von Reflektoren an Objekten, wie Lagerregalen oder Wänden, aufweisen. Der Transportroboter 4 kann weiters einen RFID-Reader zur Detektion von RFID-Tags an Objekten oder im Boden aufweisen. Durch diese RFID-Tags können Einzelregaltransportwege 8 gekennzeichnet sein, die für den Transport von Einzelregalen 1 durch Transportroboter 4 vorgesehen sind. Der Transportroboter 4 kann weiters einen Barcode-Scanner zur Detektion von Barcodes an Objekten oder Einzelregaltransportwegen 8 aufweisen. Der Transportroboter 4 kann weiters ein Indoor-GPS zur Positionsbestimmung aufweisen oder ein WLAN-Netzwerk in dem Regallager zur WLAN-Triangulation verwenden. Der Transportroboter 4 kann weiters Odometrie zur Detektion der Lageveränderung anhand von Radumdrehungen des Transportroboters 4 anwenden. All diese Sensoren ermöglichen dem Transportrobotern 4 des Kommissioniersystems 5 Einzelregale 1 zwischen dem Regallager und Kommissionierplätzen 9 ohne Kollisionen mit Objekten oder Personen zu transportieren. Der Transportroboter 4 verfügt weiters über ein Not-Halt-Sicherheitssystem, das den Transportroboter 4 immer anhält, wenn ein Objekt oder eine Person unerwartet in einem Sicherheitsbereich um den Transportroboter 4 detektiert wird. Der Sicherheitsbereich kann beispielsweise durch den Laserscanner 6 überwacht werden und einen Bereich von 50 Zentimetern vor dem Transportroboter 4 in Transportrichtung umfassen. Der Sicherheitsbereich könnte aber auch nur 30 Zentimeter oder einen Meter groß sein. Hierdurch ist sichergestellt, dass es zu keinen Kollisionen kommen kann.

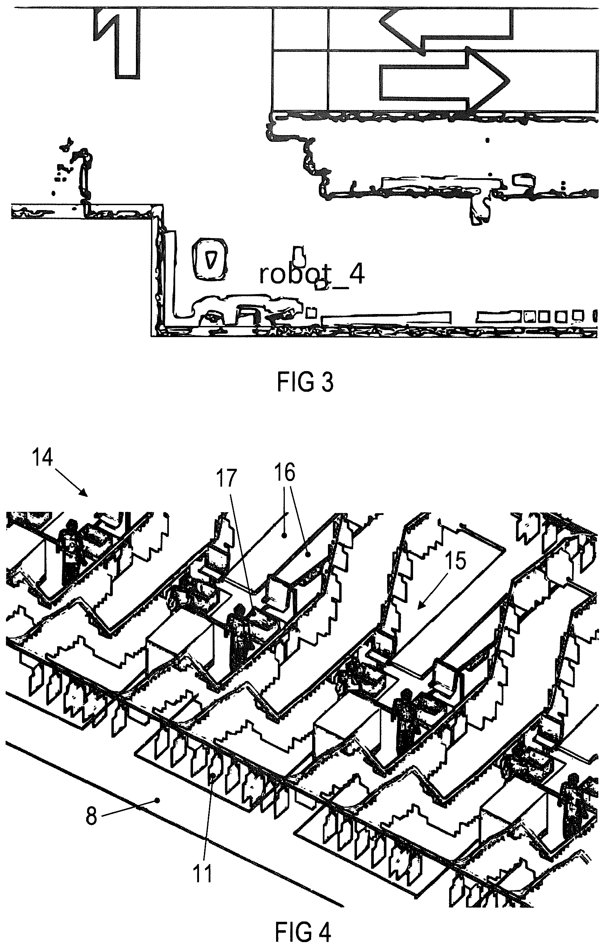

Der Transportroboter 4 ist nunmehr weiters dazu ausgebildet in einem Lernmodus die Position und Ausdehnung von Objekten entlang der Einzelregaltransportwege 8 durch Vermessen mit dem Laserscanner 6 und Speichern der Vermessungsergebnisse zu lernen. Hierfür wird der Transportroboter 4 von einer Bedienperson manuell entlang den Einzelregaltransportwegen bewegt, wobei der Laserscanner 6 Positionsinformationen ermittelt, wie diese beispielhaft in Figur 3 dargestellt sind. Jeder Punkt in der Draufsicht auf einen Teil des Kommissioniersystems 5 zeigt die von dem Laserscanner 6 ermittelten Positionsinformationen. Hierbei sind Wände und andere Objekte zu sehen. Sollten in dem Lernmodus Objekte von dem Laserscanner 6 vermessen worden sein, die nicht dauerhaft in dem Kommissioniersystem 5 vorhanden sind, wie beispielsweise Beine der Bedienperson, dann kann man diese Positionsinformation an einem Computer des Steuerrechners des Kommissioniersystems 5 wieder löschen. Die korrigierten Positionsinformationen, die ein Abbild des Layouts des Kommissioniersystems 5 und hierbei insbesondere das Umfeld der Einzelregaltransportwege 8 wiedergeben, wird anschließend von dem Steuerrechner des Kommissioniersystems 5 an die in den Transportrobotern 4 vorgesehenen Steuerungseinheiten übermittelt. Hierdurch ist der Vorteil erhalten, dass jeder Transportroboter 4 genaue Positionsinformationen für den Transport von Einzelregalen entlang Einzelregaltransportwegen 8 zwischen dem Regallager und den Kommissionierplätzen 9 zur Verfügung hat.

Figur 2 zeigt nunmehr mehrere Kommissionierplätze 9 des Kommissioniersystems 5 mit Einzelregalen 1 in einer Schrägansicht. Die Einzelregale 1 wurden von Transportrobotern 4 aus einem Regallager über Einzelregaltransportwege 8 zu den Kommissionierplätzen 9 transportiert. An den Kommissionierplätzen 9 ist weiters eine Hängefördertechnik 10 zum Abtransport von Fördertaschen 11 vorgesehen. An jedem Kommissionierplatz 9 steht eine Kommissionierperson 12, die an einem Computer 13 des Steuerrechners angezeigt erhält welche Anzahl welches Artikels 2 in dem Einzelregal 1 aus dem Einzelregal 1 entnommen und in eine oder mehrere Fördertaschen 11 kommissioniert werden soll. Hierbei ist der Steuerrechner auch dazu ausgebildet eine Batchkommissionierung durchzuführen, um Artikel 2 mehrerer Aufträge vorerst in nur eine Fördertasche 11 zu kommissionieren. Die Artikel 2 werden dann an einer nachgelagerten Sortier- und Packstation den einzelnen Aufträgen zugeordnet in Auftragsbehälter gelegt und versandt.

Durch das Vorsehen der Transportroboter 4, um ganze Einzelregale 1 aus dem Regallager zu holen, in Kombination mit der Batchkommissionierung in Behälter und insbesondere in Fördertaschen 11 ist der Vorteil erhalten, dass besonders wenige Transporte zwischen dem Regallager und dem Kommissionierplatz 9 erfolgen müssen. Auf eine klassische Lagerbehälterfördertechnik kann gänzlich verzichtet werden, wodurch Kosten gespart und eine hohe Flexibilität erreicht wird. Dies insbesondere deshalb, weil jederzeit recht einfach neue oder veränderte Einzelregaltransportwege 8 festgelegt werden können. Durch eine besondere Führung der Hängefördertechnik 10 und der Einzelregaltransportwege 8 ist erreicht, dass Einzelregaltransportwege 8 abschnittsweise unter der Hängefördertechnik 10 geführt werden, wodurch der Platz in dem Kommissioniersystem 5 besonders platzsparend ausgenutzt wird. Wie anhand von Figur 2 ersichtlich sind auch die Kommissionierplätze 9 untereinander mit Einzelregaltransportwegen 8 verbunden, wodurch Einzelregale 1 auch direkt von einem Kommissionierplatz 9 zu einem anderen Kommissionierplatz 9 transportiert werden können, wenn ein Artikel 2 aus dem Einzelregal 1 dort zum Kommissionieren benötigt werden. Hierdurch kann die Kommissionierung besonders effizient und zeitsparend durchgeführt werden.

Figur 4 zeigt ein Kommissioniersystem 14 gemäß einem weiteren Ausführungsbeispiel der Erfindung, wobei im Vergleich zu dem Kommissioniersystem 5 gemäß Figur 2 zusätzlich an jeden Kommissionierplatz 15 Bandförderer 16 zum Zu- und Abtransport von Auftragsbehälterkisten 17 mit kommissionierten Artikeln 2 vorgesehen sind. Hierdurch ist der Vorteil erhalten, dass an den Kommissionierplätzen 15 parallel oder auch aufeinanderfolgend sowohl in Fördertaschen 11 als auch in Auftragsbehälterkisten 17 kommissioniert werden kann. Hierdurch sind eine Batchkommissionierung und eine Auftragskommissionierung parallel in Fördertaschen 11 und/oder Auftragsbehälterkisten 17 durchführbar.

Es kann erwähnt werden, dass der Transportroboter auch autonom und nicht unmittelbar vom Steuerrechner gesteuert im Kommissioniersystem Einzelregale transportieren könnte. In diesem Fäll würde der Steuerroboter an den Transportroboter beispielsweise nur eine Liste von Einzelregalen und Kommissionierplätzen übermitteln, zu denen die Einzelregale transportiert werden sollen. Der Transportroboter könnte dann autonom die hierfür nötigen Transporte planen und durchführen.

Gemäß eines weiteren Ausführungsbeispiels der Erfindung weisen die Einzelregale keine Rollen an den Füßen auf, weshalb die Transportroboter eine Anhebetechnik aufweisen, um Einzelregale geringfügig vom Boden abzuheben und danach erst zu transportieren. Gemäß diesem Ausführungsbeispiel ist sichergestellt, dass die Einzelregale immer zuverlässig an ihrer Position stehen.

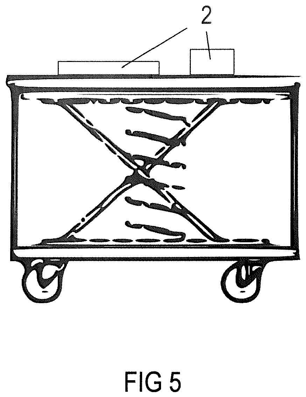

Gemäß einem weiteren in den Figuren nicht dargestellten Ausführungsbeispiel der Erfindung ist das Kommissioniersystem und das Kommissionierverfahren zum Vorkommissionieren von Artikel in einen oder mehrere Transportwagen ausgebildet. Gemäß den vorstehend erläuterten Ausführungsbeispielen werden ja die zu kommissionierende Artikel enthaltende Einzelregale zu dem Kommissionierplatz transportiert, was gemäß diesem Ausführungsbeispiel nicht erfolgen muss, da mit dem Transportwagen nur jene Artikel transportiert werden, die tatsächlich am Kommissionierplatz kommissioniert werden sollen. Transportwagen weisen einen Bereich auf, in den Artikel gelegt und hierbei vorkommissioniert oder batch-kommissioniert werden können. Besonders vorteilhaft sind dem Fachmann an sich bekannte Federbodenwagen als Transportwagen verwendbar, bei denen Artikel auf einen durch eine Feder nach oben gedrückten Boden gelegt werden, wie dies in Figur 5 zu sehen ist. Der Boden senkt sich ab, wenn mehrere oder schwerere Artikel in den Federbodenwagen gelegt wurden, wodurch weitere Artikel ergonomisch vorteilhaft ohne hinunterbücken auf die bereits im Federbodenwagen befindlichen Artikeln gelegt werden können. Hierdurch kann das Volumen der mit dem Transportwagen transportierten Artikel wesentlich erhöht werden. Die Transportwagen weisen selber keinen Antrieb auf, können aber von einem Transportroboter unterfahren werden, der dann den Transportwagen entlang der Einzelregaltransportwege transportieren kann.

Der Steuerrechner ist dazu ausgebildet einen leeren Transportwagen oder einen bereits vorkommissionierte Artikel enthaltenen Transportwagen zu jenen Regallagerplätzen in dem Regallager zu transportieren, in denen zu kommissionierende Artikel gelagert werden. Als Steuerrechner ist hierbei sowohl der das gesamte Regallager samt Kommissionierplätzen steuernde Rechner als auch die in den einzelnen Transportwagen vorgesehenen Rechner zu verstehen. Das Vorkommissionieren dieser Artikel von dem Regallagerplatz in den Transportwagen kann manuell durch einen Kommissionierer oder auch maschinell durch einen Roboterarm erfolgen. Der Roboterarm könnte auf dem Transportroboter, dem Transportwagen oder an einer anderen Stelle des Regallagers angeordnet sein. Der die vorkommissionierten Artikel enthaltende Transportwagen wird mit einem Transportroboter, gesteuert durch den Steuerrechner, zu jenem Kommissionierplatz transportiert, an dem die in dem Transportwagen befindlichen vorkommissionierten Artikel in Auftragsbehälter und/oder Fördertaschen kommissioniert werden sollen. Artikel für einen Kommissionierauftrag können von einem oder mehreren Transportwagen zu dem Kommissionierplatz transportiert werden. Ein Transportwagen kann auch Artikel für zwei oder mehr Kommissionierplätze vorkommissionieren, weshalb der Transportwagen nach Entnahme der an einem Kommissionierplatz vom Kommissionierer entnommenen Artikel zu dem anderen Kommissionierplatz transportiert wird. Nach dem Entnehmen aller vorkommissionierten Artikel aus dem Transportwagen und dem Kommissionieren der Artikel an dem Kommissionierplatz können die leeren Transportwagen für weitere Vorkommissionieraufträge verwendet werden.

Der Einsatz von Transportwagen hat den Vorteil, dass nicht das gesamte Einzelregal zu dem Kommissionierplatz transportiert werden muss, was für den Transportroboter eine erhebliche Last und Energieaufwand darstellt. Weiters ist der Vorteil gegeben, dass wenn eine Art von Artikel für mehrere Kommissionieraufträge an mehreren Kommissionierplätzen mehr oder weniger gleichzeitig zum Kommissionieren benötigt wird, diese Aufgabe von mehreren Transportwagen parallel erledigt werden kann und nicht an einem Kommissionierplatz darauf gewartete werden muss, bis das Einzelregal mit diesem Artikel an einem anderen Kommissionierplatz nicht mehr benötigt wird. Hierdurch kann der Durchsatz an Kommissionieraufträgen wesentlich gesteigert werden.

## Patentansprüche

1. Kommissioniersystem (5; 14) zum Kommissionieren von in einem Regallager gelagerten Artikeln (2) in Fördertaschen (11) mit
einer Mehrzahl an in Regalreihen und/oder Regalebenen angeordneten Regallagerplätzen des Regallagers zum Lagern der Artikel (2) und mit
einer Hängefördertechnik (10) zum Transport von Fördertaschen (11) und mit einem Kommissionierplatz (9; 15) gemäß dem Ware-zu-Person-Prinzip, an dem eine von einem Steuerrechner vorgegebene Anzahl von Artikeln (2) in Fördertaschen kommissionierbar ist, **dadurch gekennzeichnet, dass**
das Regallager modular in Form von unabhängigen Einzelregalen (1) ausgebildet ist und, dass zumindest ein durch den Steuerrechner gesteuerter oder autonomer Transportroboter (4) vorgesehen ist, der zum Unterfahren eines Einzelregals (1) und/oder eines Transportwagens und zum Transport des Einzelregals (1) und/oder des Transportwagens zu dem Kommissionierplatz (9; 15) ausgebildet ist, wenn zumindest ein in dem Einzelregal (1) gelagerter Artikel (2) und/oder ein von dem Regallager in den Transportwagen vorkommissionierter Artikel (2) an dem Kommissionierplatz in eine Fördertasche (11) zu kommissionieren ist, wobei zumindest zwei Kommissionierplätze (9; 15) vorgesehen sind und dass ein Einzelregaltransportweg (8) zwischen den beiden Kommissionierplätzen (9; 15) vorgesehen ist, um das Einzelregal (1) und/oder den Transportwagen mit dem Transportroboter (4) von dem einen Kommissionierplatz (9; 15) zu dem zweiten Kommissionierplatz (9; 15) zu transportieren.

2. Kommissioniersystem (5; 14) gemäß Anspruch 1, **dadurch gekennzeichnet, dass** der Transportwagen durch einen Federbodenwagen gebildet ist.

3. Kommissioniersystem (5; 14) gemäß einem der Ansprüche 1 oder 2, **dadurch gekennzeichnet, dass** Einzelregaltransportwege (8) vorgesehen sind, die einen Transport eines beliebigen Einzelregals (1) und/oder Transportwagens des Regallagers mit dem Transportroboter (4) aus dem Regallager zu dem zumindest einen Kommissionierplatz (9; 15) ermöglichen.

4. Kommissioniersystem (5; 14) gemäß Anspruch 3, **dadurch gekennzeichnet, dass** die Einzelregaltransportwege (8) zumindest abschnittsweise unter der Hängefördertechnik (10) vorgesehen sind.

5. Kommissioniersystem (14) gemäß einem der vorstehenden Ansprüche, **dadurch gekennzeichnet, dass** eine Auftragsbehälterfördertechnik (16) zum Transport von Auftragsbehältern (17) zu dem zumindest einen Kommissionierplatz (15) vorgesehen ist und, dass der Steuerrechner zum Vorgeben der Anzahl von Artikeln (2) ausgebildet ist, die in den Auftragsbehälter (17) und die in die Fördertaschen (11) zu kommissionieren sind.

6. Kommissioniersystem (5; 14) gemäß einem der vorstehenden Ansprüche, **dadurch gekennzeichnet, dass** der Transportroboter (4) eine Steuerungseinheit mit einem Laserscanner (6) aufweist, um Objekte zu detektieren und Kollisionen mit diesen Objekten zu vermeiden.

7. Kommissioniersystem (5; 14) gemäß Anspruch 6, **dadurch gekennzeichnet, dass** der Steuerungseinheit in einem Lernmodus die Position und Ausdehnung von Objekten entlang von Einzelregaltransportwegen (8) durch Vermessen mit dem Laserscanner (6) und Speichern der Vermessungsergebnisse beibringbar sind.

8. Kommissioniersystem (5; 14) gemäß einem der Ansprüche 6 bis 7, **dadurch gekennzeichnet, dass** der Transportroboter (4) einen oder mehrere der folgenden Sensoren zur verbesserten Navigation aufweist: Gyroskop zur Lagebestimmung; Reflektordetektor zur Detektion von Reflektoren an Objekten; RFID-Reader zur Detektion von RFID-Tags an Objekten oder Einzelregaltransportwegen; Barcode-Scanner zur Detektion von Barcodes an Objekten oder Einzelregaltransportwegen; Indoor-GPS; WLAN-Triangulation; Odometrie zur Detektion der Lageveränderung anhand von Radumdrehungen.

9. Kommissioniersystem (5; 14) gemäß einem der Ansprüche 6 bis 8, **dadurch gekennzeichnet, dass** der Transportroboter (4) über ein Not-Halt-Sicherheitssystem verfügt, das den Transportroboter (4) anhält, wenn ein Objekt oder eine Person unerwartet in einem Sicherheitsbereich um den Transportroboter (4) detektiert wird.

10. Kommissionierverfahren zum Kommissionieren von in einem Regallager gelagerten Artikeln (2) in Fördertaschen (11) mit einem Steuerrechner zum Abarbeiten von Kommissionieraufträgen, der das Kommissionieren an zumindest einem Kommissionierplatz (9; 15) gemäß folgenden Verfahrensschritten vorgibt:
Transport eines für einen Kommissionierauftrag benötigten Artikels (2) von dem Regallager zu dem Kommissionierplatz (9; 15);
Kommissionieren der für den Kommissionierauftrag benötigten Anzahl an Artikeln (2) in die dem zumindest einen Kommissionierauftrag zugeordneten Fördertaschen (11) an dem Kommissionierplatz (9; 15);
**dadurch gekennzeichnet, dass**
der Transport des für den Kommissionierauftrag benötigten Artikels (2) derart durchgeführt wird, dass ein Einzelregal (1) des Regallagers, in dem der Artikel (2) gelagert ist, und/oder ein Transportwagen, in den der Artikel (2) von dem Regallager vorkommissioniert wurde, mit einem Transportroboter (4) von dem Regallager zu dem Kommissionierplatz (9; 15) transportiert wird und, dass die für den Kommissionierauftrag benötigte Anzahl an Artikeln (2) aus dem Einzelregal (1) und/oder dem Transportwagen in Fördertaschen (11) kommissioniert wird, wobei
ein Transport von in dem Einzelregal und/oder Transportwagen gelagerten für den Kommissionierauftrag benötigten Artikeln (2) zwischen zumindest zwei Kommissionierplätzen (9; 15) auf einem Einzelregaltransportweg (8) zwischen den beiden Kommissionierplätzen (9; 15) durchgeführt wird.

11. Kommissionierverfahren gemäß Anspruch 10, **dadurch gekennzeichnet, dass** der Transportroboter (4) in einem Lernmodus entlang von Einzelregaltransportwegen (8) manuell bewegt wird beziehungsweise fährt, wobei ein Sensor, insbesondere ein Laserscanner (6) die Position und Ausdehnung von Objekten entlang der Einzelregaltransportwege (8) vermisst und speichert, um diese bei nachfolgenden Transportfahrten auf dem Einzelregaltransportweg (8) zur Richtungssteuerung zu detektieren.

12. Kommissionierverfahren gemäß einem der Ansprüche 10 oder 11, **dadurch gekennzeichnet, dass** leere Transportwagen zum Vorkommissionieren von an dem Kommissionierplatz zu kommissionierenden Artikeln (2) von einem Transportroboter zu dem Regallager transportiert werden, in dem der zu kommissionierende Artikel (2) gelagert ist.

13. Kommissionierverfahren gemäß Anspruch 12, **dadurch gekennzeichnet, dass** ein bereits zumindest einen zu kommissionierenden Artikel (2) enthaltender Transportwagen von dem Transportroboter zu zumindest einem weiteren Einzelregal transportiert wird, um dort einen weiteren zu kommissionierenden Artikel in den Transportwagen vorzukommissionieren.

## Claims

1. An order-picking system (5; 14) for picking articles (2) stored in a racking into conveyor pockets (11) having
a plurality of racking spaces of the racking that are arranged in racking rows and/or racking levels for storing the articles (2) and having
a suspended conveyor technique (10) for transporting conveyor pockets (11) and having a picking station (9; 15) according to the good-to-person principle, at which a number of articles (2) predetermined by a controlling computer may be picked into conveyor pockets,
**characterized in that**
the racking is configured modular in the form of independent individual racks (1), and that there is provided at least one transport robot (4) controlled by the controlling computer or being autonomous, which is configured to move underneath an individual rack (1) and/or a transport trolley and to transport the individual rack (1) and/or the transport trolley to the picking station (9; 15), if at least one article (2) stored in the individual rack (1) and/or one article (2) pre-picked from the racking into the transport trolley is to be picked at the picking station into a conveyor pocket (11), wherein there are provided at least two picking stations (9; 15), and that there is provided an individual rack transport path (8) between the two picking stations (9; 15) in order to transport the individual rack (1) and/or the transport trolley using the transport robot (4) from the one picking station (9; 15) to the second picking station (9; 15).

2. An order-picking system (5; 14) according to claim 1, **characterized in that** the transport trolley is formed by a spring-bottom vehicle.

3. An order-picking system (5; 14) according to any of claims 1 or 2, **characterized in that** there are provided individual rack transport paths (8), which enable a transport of any individual rack (1) and/or transport trolley of the racking using the transport robot (4) from the racking to the at least one picking station (9; 15).

4. An order-picking system (5; 14) according to claim 3, **characterized in that** the individual rack transport paths (8) are provided at least in some sections underneath the suspended conveyor technique (10).

5. An order-picking system (14) according to any of the preceding claims, **characterized in that** there is provided an order container conveyor technique (16) for transporting order containers (17) to the at least one picking station (15) and that the controlling computer is configured to predetermine the number of articles (2), which are to be picked into the order container (17) and into the conveyor pockets (11).

6. An order-picking system (5; 14) according to any of the preceding claims, **characterized in that** the transport robot (4) has a control unit having a laser scanner (6) in order to detect objects and prevent collisions with these objects.

7. An order-picking system (5; 14) according to claim 6, **characterized in that** the control unit may learn in a learning modus the position and the dimension of objects along individual rack transport paths (8) by measuring using the laser scanner (6) and by storing the measurement results.

8. An order-picking system (5; 14) according to any of claims 6 to 7, **characterized in that** the transport robot (4) has one or several of the following sensors for improved navigation: gyroscope for the determination of position; reflector detector for the detection of reflectors at objects; RFID reader for the detection of RFID tags at objects or individual rack transport paths; barcode scanner for the detection of barcodes at objects or individual rack transport paths; indoor GPS; WLAN triangulation; odometry for the detection of the change of position by way of wheel revolutions.

9. An order-picking system (5; 14) according to any of claims 6 to 8, **characterized in that** the transport robot (4) has an emergency stop safety system, which will stop the transport robot (4) if there is unexpectedly detected an object or a person in a safety area around the transport robot (4).

10. An order-picking method for picking articles (2) stored in a racking into conveyor pockets (11) using a controlling computer for handling picking orders, which provides the picking at the at least one picking station (9; 15) according to the following method steps:
Transport of an article (2) required for a picking order from the racking to the picking station (9; 15);
Picking the number of articles (2) required for the picking order into the conveyor pockets (11) assigned to the at least one picking order at the picking station (9; 15);
**characterized in that**
the transport of the article (2) required for the picking order is carried out such that an individual rack (1) of the racking, in which the article (2) is being stored, and/or a transport trolley, into which the article (2) from the racking has been pre-picked, is transported using a transport robot (4) from the racking to the picking station (9; 15) and that the number of articles (2) required for the picking order is picked from the individual rack (1) and/or the transport trolley into conveyor pockets (11), wherein
a transport of articles (2) required for the picking order that are stored in the individual rack and/or the transport trolley is carried out between at least two picking stations (9; 15) on an individual rack transport path (8) between the two picking stations (9; 15).

11. An order-picking method according to claim 10, **characterized in that** the transport robot (4) is moved manually or moves, respectively, along individual rack transport paths (8) in a learning modus, wherein a sensor, in particular a laser scanner (6), measures and stores the position and dimension of objects along the individual rack transport paths (8) in order to detect these during subsequent transport runs on the individual rack transport path (8) for direction control.

12. An order-picking method according to any of claims 10 or 11, **characterized in that** empty transport trolleys are transported by a transport robot for pre-picking articles (2) to be picked at the picking station to the racking, in which the article (2) to be picked is being stored.

13. An order-picking method according to claim 12, **characterized in that** a transport trolley containing already at least one article (2) to be picked is transported by the transport robot to the at least one further individual rack in order to pre-pick there a further article to be picked into the transport trolley.

## Revendications

1. Système de préparation de commandes (5; 14) pour la préparation de commandes d'articles (2) stockés dans un magasin à rayonnage dans des poches de transport (11), comprenant:
une pluralité d'emplacements de magasin à rayonnage du magasin à rayonnage, disposés dans des rangées de rayonnage et/ou des plans de rayonnage pour le stockage des articles (2), et comprenant:
un mécanisme de transport suspendu (10) pour le transport de poches de transport (11), et comprenant:
un poste de préparation de commandes (9; 15) selon le principe une marchandise-une personne, auquel un nombre d'articles (2) prédéterminé par un ordinateur de commande peuvent être préparés dans des poches de transport,
**caractérisé en ce que** le magasin à rayonnage est réalisé de façon modulaire sous la forme de rayonnages individuels indépendants (1), et **en ce qu'**il est prévu au moins un robot de transport (4) autonome ou commandé par l'ordinateur de commande, qui est configuré de manière à passer sous un rayonnage individuel (1) et/ou un chariot de transport et à transporter le rayonnage individuel (1) et/ou le chariot de transport jusqu'au poste de préparation de commandes (9; 15), lorsqu'au moins un article (2) stocké dans le rayonnage individuel (1) et/ou un article (2) déjà préparé à partir du magasin à rayonnage dans le chariot de transport doit être préparé au poste de préparation de commandes dans une poche de transport (11), dans lequel il est prévu au moins deux postes de préparation de commandes (9; 15), et **en ce qu'**il est prévu un chemin de transport de rayonnage individuel (8) entre les deux postes de préparation de commandes (9; 15), afin de transporter le rayonnage individuel (1) et/ou le chariot de transport avec le robot de transport (4) d'un poste de préparation de commandes (9; 15) jusqu'au deuxième poste de préparation de commandes (9; 15).

2. Système de préparation de commandes (5; 14) selon la revendication 1, **caractérisé en ce que** le chariot de transport est formé par un chariot à fond mobile à ressort.

3. Système de préparation de commandes (5; 14) selon l'une des revendications 1 ou 2, **caractérisé en ce qu'**il est prévu des chemins de transport de rayonnage individuel (8), qui permettent un transport d'un quelconque rayonnage individuel (1) ou d'un quelconque chariot de transport du magasin à rayonnage avec le robot de transport (4) du magasin à rayonnage audit au moins un poste de préparation de commandes (9; 15).

4. Système de préparation de commandes (5; 14) selon la revendication 3, **caractérisé en ce que** les chemins de transport de rayonnage individuel (8) sont prévus au moins en partie en-dessous du mécanisme de transport suspendu (10).

5. Système de préparation de commandes (14) selon l'une quelconque des revendications précédentes, **caractérisé en ce qu'**il est prévu un mécanisme de transport de conteneurs de commande (16) pour le transport de conteneurs de commande (17) vers ledit au moins un poste de préparation de commandes (15), et **en ce que** l'ordinateur de commande est configuré de manière à prévoir le nombre d'articles (2) qui doivent être préparés dans le conteneur de commande (17) ainsi que dans les poches de transport (11).

6. Système de préparation de commandes (5; 14) selon l'une quelconque des revendications précédentes, **caractérisé en ce que** le robot de transport (4) présente une unité de commande équipée d'un scanneur à laser (6) dans le but de détecter des objets et d'éviter des collisions avec ces objets.

7. Système de préparation de commandes (5; 14) selon la revendication 6, **caractérisé en ce que** la position et l'extension d'objets le long de chemins de transport de rayonnage individuel (8) peuvent être apprises à l'unité de commande, dans un mode d'apprentissage, en réalisant une mesure à l'aide du scanneur à laser (6) et en mémorisant des résultats de mesure.

8. Système de préparation de commandes (5; 14) selon l'une quelconque des revendications 6 à 7, **caractérisé en ce que** le robot de transport (4) présente un ou plusieurs des capteurs suivants pour l'amélioration de la navigation: gyroscope pour la détermination de la position; détecteur de réflecteur pour la détection de réflecteurs sur des objets; lecteurs RFID pour la détection d'étiquettes RFID sur des objets ou des chemins de transport de rayonnage individuel; lecteur de code-barres pour la détection de codes-barres sur des objets ou des chemins de transport de rayonnage individuel; GPS intérieur; triangulation WLAN; odométrie pour la détection du changement de position à l'aide de tours de roue.

9. Système de préparation de commandes (5; 14) selon l'une quelconque des revendications 6 à 8, **caractérisé en ce que** le robot de transport (4) dispose d'un système de sécurité avec arrêt d'urgence, qui arrête le robot de transport (4), lorsqu'un objet ou une personne est détecté(e) de façon inattendue dans une zone de sécurité autour du robot de transport (4).

10. Procédé de préparation de commandes pour préparer des commandes d'articles (2) stockés dans un magasin à rayonnage dans des poches de transport (11) avec un ordinateur de commande pour l'exécution de demandes de préparation de commandes, qui prévoit la préparation de commandes à au moins un poste de préparation de commandes (9; 15) selon les étapes de procédé suivantes:
transporter un article (2) nécessaire pour une demande de préparation de commandes depuis le magasin à rayonnage jusqu'au poste de préparation de commandes (9; 15); et
préparer des commandes du nombre d'articles (2) nécessaires pour la demande de préparation de commandes dans les poches de transport (11) associées à ladite au moins une demande de préparation de commandes au poste de préparation de commandes (9; 15);
**caractérisé en ce que**
on effectue le transport de l'article (2) nécessaire pour la demande de préparation de commandes, de telle manière que l'on transporte un rayonnage individuel (1) du magasin à rayonnage, dans lequel l'article (2) est stocké, et/ou un chariot de transport, dans lequel l'article (2) a déjà été préparé à partir du magasin à rayonnage, avec un robot de transport (4) depuis le magasin à rayonnage jusqu'au poste de préparation de commandes (9; 15), et que l'on prépare le nombre d'articles (2) nécessaires pour la demande de préparation de commandes à partir du rayonnage individuel (1) et/ou du chariot de transport dans des poches de transport (11), et
dans lequel on effectue un transport d'articles (2) stockés dans le rayonnage individuel et/ou dans le chariot de transport nécessaires pour la demande de préparation de commandes entre au moins deux postes de préparation de commandes (9; 15) sur un chemin de transport de rayonnage individuel (8) entre les deux postes de préparation de commandes (9; 15).

11. Procédé de préparation de commandes selon la revendication 10, **caractérisé en ce que** le robot de transport (4) est déplacé manuellement ou circule dans un mode d'apprentissage le long de chemins de transport de rayonnage individuel (8), dans lequel un capteur, en particulier un scanneur à laser (6), mesure et mémorise la position et l'extension d'objets le long des chemins de transport de rayonnage individuel (8), afin de détecter ceux-ci lors de trajets de transport ultérieurs sur le chemin de transport de rayonnage individuel (8) pour la commande de la direction.

12. Procédé de préparation de commandes selon l'une des revendications 10 ou 11, **caractérisé en ce que** l'on transporte des chariots de transport vides pour la première préparation d'articles (2) à préparer au poste de préparation de commandes depuis un robot de transport jusqu'au magasin à rayonnage, dans lequel l'article à préparer (2) est stocké.

13. Procédé de préparation de commandes selon la revendication 12, **caractérisé en ce que** l'on transporte un chariot de transport contenant déjà au moins un article à préparer (2) depuis le robot de transport jusqu'à au moins un autre rayonnage individuel, afin d'y préparer déjà un autre article à préparer dans le chariot de transport.
